# EUROPEAN PATENT APPLICATION

(11) **EP 3 035 224 A1**
(43) Date of publication of application: **22.06.2016**
(21) Application number: 14835981.3
(22) Date of filing: 11.08.2014
(51) Int. Cl.: G06F 21/12, G06F 11/36

(54) **METHOD FOR VERIFYING INTEGRITY OF DYNAMIC CODE USING HASH**

(30) Priority: 16.08.2013 KR 20130097412
(71) Applicant: Inka Entworks, Inc., Seoul 140-872 (KR)
(72) Inventor: NAM, Jae Min, Seoul 122-900 (KR); PARK, Jung Geun, Gyeonggi-do 463-967 (KR); HONG, Jun Ho, Namyangju-si Gyeonggi-do 475-952 (KR); OH, Jun Seok, Seoul 140-903 (KR); KIM, Jung Soo, Seoul 131-813 (KR)
(74) Representative: Coralis Harle
(86) International application number: PCT/KR2014/007444
(87) International publication number: WO 2015/023093

(57) **Abstract**

Disclosed are methods for verifying the integrity of a dynamic code using a hash and for generating a hash registry for the verification. Provided is the method for generating a hash registry for verification of the integrity of a dynamic code using a hash, comprising: a step for setting a security tag only for a specific function which is a part of program and requires security; a binary generation step for generating a binary by compiling a source code including at least one function to which the security tag is applied; a hash code extraction step for extracting a hash code for a code block of the specific function, if the binary is searched and the security tag is detected; and a hash registry generation step for generating a hash registry including the hash codes for at least one function generated in the has code extraction step.

## Description

### BACKGROUND OF THE INVENTION

### Field of the Invention

The present invention relates to a method for verifying the integrity of a dynamic code using a hash.

### Description of the Related Art

It is pointed out that what is described below simply provides background information related with the present embodiments but does not constitute prior art.

Recently, there have frequently been occurring examples of draining information by breaking into the computers of other people; modifying binary codes of computer programs using reverse engineering techniques such that the computer programs perform functions different from originally intended functions thereof; modifying binary codes during execution of the computer programs using tools such as debuggers and then misusing them. For example, a person who modifies program may also obtain the game items in an abnormal manner if a client program is modified such that it is performed automatically, by reverse engineering the client program which operates in user's personal computer of on-line games. Since it is difficult to find out whether the computer program is modified until the computer program is executed and even if found out, it is hard to cope with such a situation, it is necessary to check whether the computer program is modified during execution of the computer program and then take actions thereto.

Computer program which is stored in a secondary memory unit in a binary form is loaded into a main memory in order to be executed. The binary loaded into the main memory must always maintain the original state thereof. However, the binary would not be able to maintain the original state thereof if the binary is modified by a reverse engineering to be executed or if the binary is modified by using tools such as debuggers during execution of the computer programs.

In the prior art, in order to solve the problems described above, when the binary code of computer program is stored in a file form in a secondary memory unit, the integrity of the binary is verified by obtaining a hash for the whole file to check whether the file is modified, or the integrity of the binary is verified by obtaining a hash for a whole or a portion of binary loaded into a main memory to check periodically whether the binary is modified. The former is called a file hash check method (according to a file hash) and the latter is called a memory hash check method (according to a memory hash). The test method according to a memory hash is a method in which an intended purpose may be achieved only when the check is performed iteratively at a fixed time interval. Accordingly, the check method according to a memory hash may act as a factor which degrades the program execution performance and the performance of a system which performs a hash.

Therefore, if the conventional memory hash is used in a method for verifying the integrity of binary code, there is a problem that the method according to the memory hash is hard to apply in case of being sensitive to execution performance of computer programs or system performance.

### SUMMARY OF THE INVENTION

The major object of the present invention is to provide a method of preventing the degradation of program execution performance due to integrity verification, not by means of verifying periodically or iteratively the integrity of a whole or a portion of binary, but by means of verifying the integrity at a function unit only when the function to which the security tag is applied is called.

According to one aspect of the present embodiment, provided is a method of generating a hash registry for integrity verification of a dynamic code using a hash. More precisely, it is provided a method for verifying the integrity of a dynamic code using a hash, the method comprising: a step of setting a security tag only for a specific function which is a part of program and requires security; a binary generating step for generating a binary by compiling a source code including at least one function to which the security tag is applied; a hash code extraction step for extracting a hash code for a code block of the specific function including the security tag, if the binary is searched and the security tag is found; and a hash registry generation step for generating a hash registry including the hash codes for at least one function generated in the hash code extraction step.

According to an embodiment of the method, the security tag comprises a start tag indicating a starting point of an integrity check and an end tag indicating end point thereof within the code block of the specific function.

According to another embodiment of the method, the hash code extraction step comprises extracting the hash code for codes from the start tag to the end tag within the code block of the specific function.

According to still another embodiment of the method, the hash registry generating step comprises:
storing a hash code table including the hash codes for the at least one function extracted in the hash code extracting step;
generating a signature by generating and encrypting a table hash code for the hash code table; and
storing the signature.

According to a further embodiment of the method, the specific function comprises at least one of password input, payment, account authentication, encryption, decryption, certificate verification, purchase and sale of goods, arithmetic operation result determination and initialization functions.

In addition, according to another aspect of the present embodiment, provided is a method of verifying the integrity of a dynamic code using a hash, the method comprising: a step of loading a binary including at least one function to which a security tag is applied, into a main memory; a hash code extraction step for extracting a hash code for a code block of the function if a specific function including the security tag is called and the security tag is found during the execution of the binary in the main memory; a function modification determination step of confirming whether the extracted hash code coincides with any one of the hash codes of the hash code table including the hash codes for at least one function stored in a hash registry to determine whether the specific function is modified; and a step of stopping execution of the binary when the specific function is determined to be modified as the result of the function modification determination step.

According to an embodiment of the previous method, the hash code extraction step comprises:
extracting the hash code for codes from the start tag indicating a start point of integrity check to the end tag indicating end point thereof within the code block of the specific function.

It is also considered that the hash code extraction step comprises skipping the integrity check for the specific function within a predetermined time period, if the specific function is again called after the integrity check for the specific function.

It is further considered that the hash code extraction step comprises:
extracting table hash code for the hash code table stored in the hash registry in order to verify whether the hash registry is modified; and
suspending the execution of the binary if the extracted table hash code does not match a table hash code decrypted from the signature stored in the hash registry or a separate location.

According to the present embodiment, as described above, the performance of computer program execution and the system performance are degraded due to the burden of hash calculation in case that hash codes for a whole of or a portion of the binary have to be periodically or iteratively obtained in order to check whether the binary of computer program loaded into the main memory is modified. Further, in case of the computer program sensitive to the execution rate, the manner like the above is hard to be applied to the program.

For execution of the computer program that needs security for binary modification and is sensitive to program execution performance, the above problem can be solved by applying a security tag to an important function requiring protection and, in case that the function to which the security tag is applied is called, checking whether the binary is modified only for the function using the memory hash, so as to verify the integrity using a memory hash. This to say, rather than a method of checking periodically or iteratively the integrity using a memory hash, the verification of the integrity of the function is performed only when the function to which a security tag is applied is executed. Therefore, the availability of verification will be enhanced and the degradation of program execution performance will also be minimized.

Even if the function to which the security tag is applied is called iteratively, when the same function is again called after the integrity verification of the function is completed, the integrity check is configured to be skipped within a fixed time interval. Thus, the problem due to iterative call of the function can be solved.

Further, unlike the conventional method for verifying the integrity using a memory hash, since the binary to which security tag of a function unit is applied and the hash registry including hash codes are distributed together, a process for obtaining a separate original binary necessary for determining whether the modification is accomplished or not is not required. Also, since the integrity check is performed within the function when the function is called, a separate program which performs the integrity check is not required. In case that a separate program for verifying the integrity is necessary, a means to prevent modified program from being executed will disappear if the program for integrity verification is incapacitated. In contrast, if the verification of integrity is performed at a function unit to which security tag is applied, the problems described above do not occur because the verification of integrity is also accomplished while the function is called.

Meanwhile, the security tag is suitable for the critical function requiring protection in account authentication, password entry, payment, security (hash checking, anti-debugging, etc.), encryption, decryption, certificate verification, purchases and sales of goods, initialization, server communication, reading and writing of configuration files (SAFE Files), arithmetic result determination and program execution, rather than for the function called iteratively at a short time interval. The above critical function has characteristics of not being called iteratively with a constant period. Even if the critical function is called iteratively, in case that the same function is again called after the integrity verification of the function is completed, the verification can be configured to be skipped within a fixed time interval.

### BRIEF DESCRIPTION OF THE DRAWINGS

FIGURE 1 is a schematic diagram of the concept of verifying the integrity of a dynamic code by using a memory hash of a function unit according to the embodiment.
FIGURE 2 is a block diagram of program being capable of verifying the integrity of a dynamic code of a function unit according to the embodiment.
FIGURE 3 is a flow chart of a process of generating a hash registry by extracting a hash code from a binary to which a security tag is applied according to the embodiment.
FIGURE 4 is a flow diagram of a process of generating a signature for verifying the integrity of a hash registry according to the embodiment.
FIGURE 5 is an illustration of a process for generating a hash registry by extracting a hash code from the function to which security tags are applied according to the embodiment.
FIGURE 6 is a block diagram of a user terminal to execute a binary to which a security tag is applied according to the embodiment.
FIGURE 7 is a flow diagram of a process of performing the integrity verification of a function unit for a binary to which a security tag is applied according to the embodiment.
FIGURE 8 is a diagram illustrating a process of performing the integrity verification of a function unit according to the embodiment.

### DESCRIPTION OF SPECIFIC EMBODIMENTS

The present embodiments will now be described in detail with reference to the accompanying drawings.

A method of verifying the integrity of a binary using a hash according to this embodiment may be equally applicable if program language may generate the native code such as C / C ++ language, regardless of a hardware such as PC, a server, a smart phone, etc. or an operating system in which application software such as Windows, UNIX, Linux, OS X, etc. is executed. That is, since the method may verify the integrity at a key function unit requiring security independent of the hardware and the operating system, it has a general-purpose and a high availability, and may also minimize the effect on the execution performance of program.

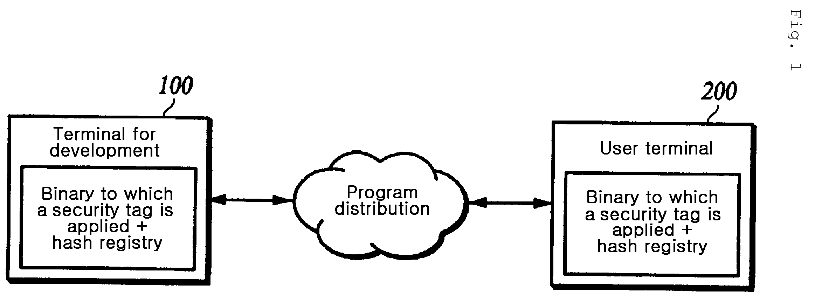

FIGURE 1 is a schematic diagram of the concept of verifying the integrity of a dynamic code by using a memory hash of a function unit according to the embodiment.

A method for verifying the integrity of a binary using a memory hash of a function unit according to the embodiment comprises the step of generating binary including a function to which a security tag is applied and a step of generating a hash registry from the binary in a terminal for development 100. However, the generation of the hash code of the function unit and the generation of the hash registry from the binary do not have to be made in a single device. The binary to which a security tag is applied and the hash registry are distributed to a user through a distribution means such as a network or a storage medium and are stored in a user terminal 200. The user terminal 200 may execute by loading a binary including at least one function to which a security tag is applied, into a main memory. At this time, if the security tag is detected, a process of verifying the integrity of the function including the security tag is performed.

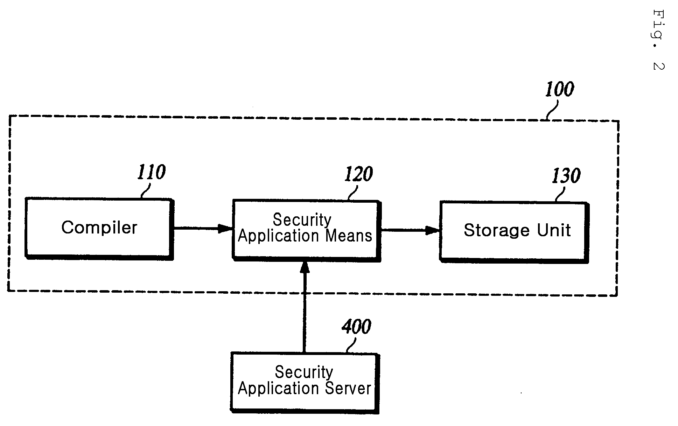

FIGURE 2 is a block diagram of program being capable of verifying the integrity of a dynamic code of a function unit according to the embodiment.

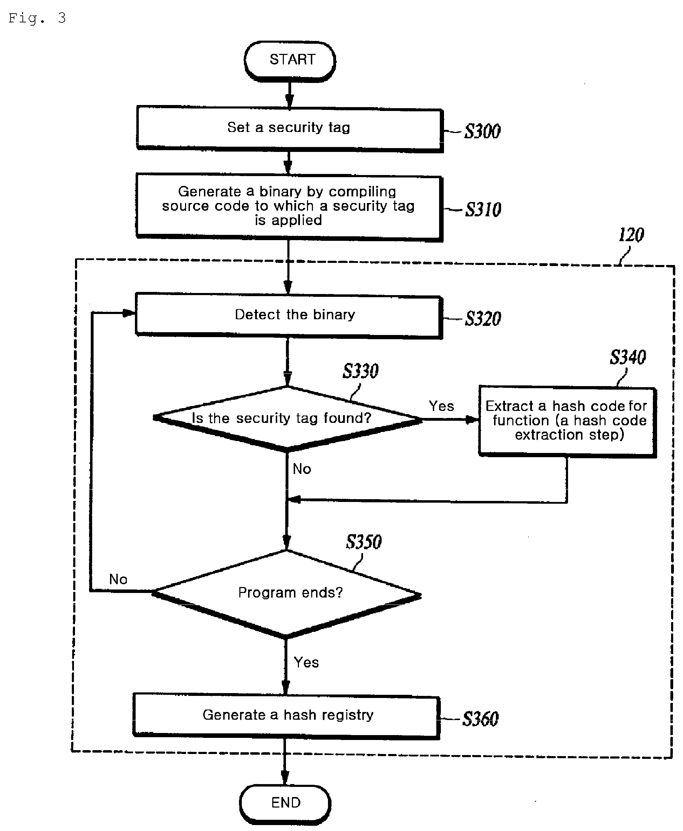

Hereinafter, with reference to a process of applying a security tag of a function unit in FIGURE 3, the components of FIGURE 2 will be described. An internal configuration of a terminal for development 100 includes a complier 110, a security application means 120 and a storage unit 130 as shown in FIGURE 2. A security application server 400 may perform a hash code extraction step (S340) and a hash registry generation step (S360) performed in the security application means 120, instead of the terminal for development 100.

The compiler 110 may compile a source code including at least one function to which a security tag is applied to generate a binary. The security application means 120 searches a security tag in the binary generated by the compiler 110 and if the security tag is detected, performs a hash code extraction step for generating a hash code for codes from a start tag indicating a start point of integrity verification to an end tag indicating an end point thereof (S340), and generates a hash registry which includes at least one hash code extracted in the hash code extraction step (S360). The hash code extraction step (S340) and the hash registry generation step (S360) which the security application means 120 performs can also be performed in the terminal for development 100 but can also be performed in the security application server 400 if the entire binary is transferred to the security application server 400. In addition, the security application means 120 can find out the security tag (S330) and transfer the codes from the start tag to the end tag to the security application server 400, thereby also allowing the security application server 400 to perform the hash code extraction step (S340) and the hash registry generation step (S360). The hash registry generated by the security application means 120 is stored in a storage unit 130 in the form of file with the binary (S360).

FIGURE 3 is a flow chart of a process of generating a hash registry by extracting a hash code from a binary to which a security tag is applied according to the embodiment.

In a source code of computer program including a plurality of functions, a security tag is set in at least one function which includes a key function and the like which requires security in account authentication, password entry, payment, security (hash checking, anti-debugging, etc.), encryption, decryption, certificate verification, buying and selling of goods, initialization, server communications, read and write of a configuration file (a SAFE file), arithmetic operation result determination and program execution (S300). The functions like the above usually have the feature that they are not periodically and repeatedly called, but are a major subject of interest to people who intend to modify computer program. Therefore, even if the integrity verification is accomplished only for the functions like the above, availability is very high and the deterioration of the execution performance of programs due to the integrity verification can also be minimized. A source code including the function to which a security tag is applied is compiled by a compiler 110 to be a binary form (S310). That is, the binary file is generated by the compiler 110 (S310).

Hereinafter, a process performed in a security application means 120 and a process performed in a storage unit 130 will be described. The security application means 120 detects a security tag in the binary (S320). If the security tag is not detected, whether the end of the binary is reached is confirmed (S350). If not reached, the process returns to the step S320 and continues detection. If the security tag is detected, by taking the codes between the start tag indicating the start and the end tag indicating the end of the integrity check as an input of the hash function (MD5, SHA, Checksum, etc.) a hash code is extracted within a code block of the function including a security tag (S340). This is referred to as a hash code extraction process. If the detection is completed by the end of the binary (S350), a hash registry including a hash code table of hash codes for at least one function extracted before is generated (S360). The hash registry can also be stored in a separate file from the binary file. In addition, the hash registry can also be stored by being attached to the end of the binary file.

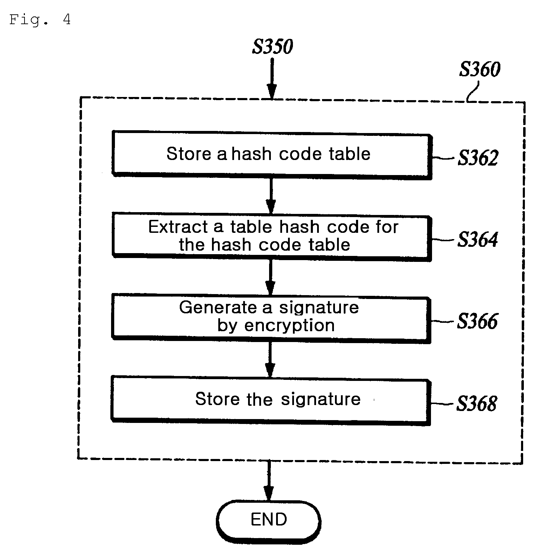

FIGURE 4 is a flow diagram of a process of generating a signature for verifying the integrity of a hash registry according to the embodiment.

The step of generating a hash registry (S360) stores in the hash registry a hash code table including hash codes extracted at at least one function unit (S362). However, the hash code stored in the hash registry may be exposed to a person intending to modify programs, thereby allowing it to be modified. In other words, in order to validate the integrity of the hash registry, by taking the hash code table including the hash codes for at least one function stored in the hash registry as the input of hash function (MD5, SHA, Checksum, etc.), a table hash code is extracted (S364). A signature is generated by encrypting the extracted table hash code (S366). As the signature is an important part which verifies the integrity of the hash registry, it is encrypted by the encryption algorithm (AES, DES, RSA, etc.) so that it may be protected (S366). The signature may also be stored in the hash registry with the hash code table. In addition, the signature may also be stored in a separate location from the hash registry (S368).

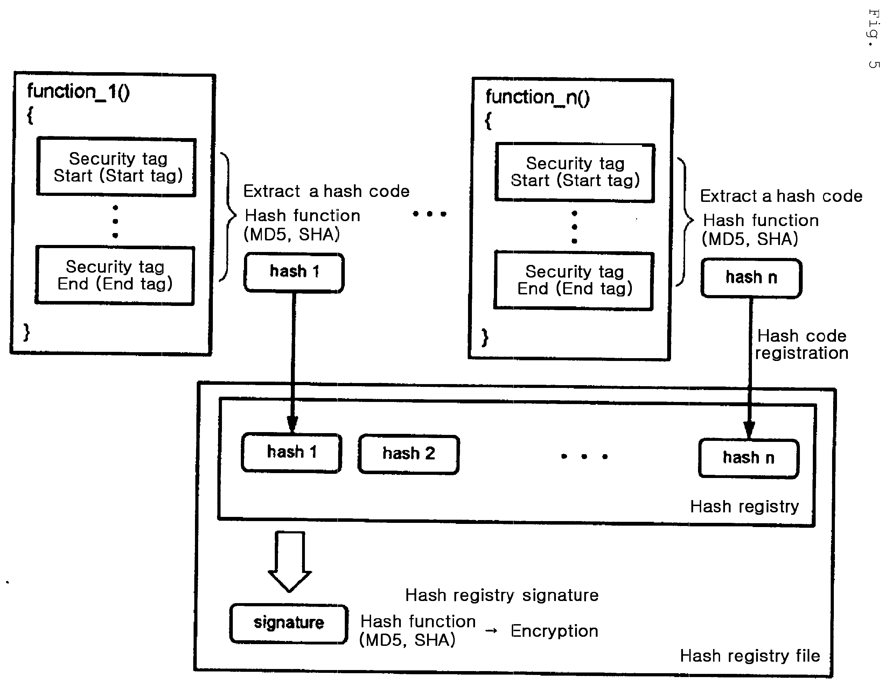

FIGURE 5 is an illustration of a process for generating a hash registry by extracting a hash code from the function to which security tags are applied according to the embodiment.

A security tag comprises a start tag indicating the start point of the integrity verification and an end tag indicating the end point thereof. A hash code is extracted within the code block of function to which a security tag is applied by taking the codes from a start tag to an end tag as an input of the hash function (MD5, SHA, Checksum, etc.) (S340). In an illustration of Figure 5, function_1 includes a security tag comprising a start tag and an end tag. If the codes from a start tag to an end tag of function_1 are taken as an input of hash function such as MD5, SHA and Checksum, a hash code of hash 1 is extracted (S340).

As a security tag is applied to at least one function, the hash registry also includes at least one hash code. In the illustration of Figure 5, a hash code table including hash codes, i.e., hash 1, hash 2, ... hash n extracted from n number of functions to which security tags are applied, is stored in the hash registry (S362). A table hash code is extracted by taking a hash code table as an input of the hash function of MD5, SHA, Checksum, and the like (S364). A signature is generated by encrypting the extracted table hash code using encryption algorithm of AES, DES, RSA and the like (S366). And the generated signature is stored in the hash registry or a separate location (S368).

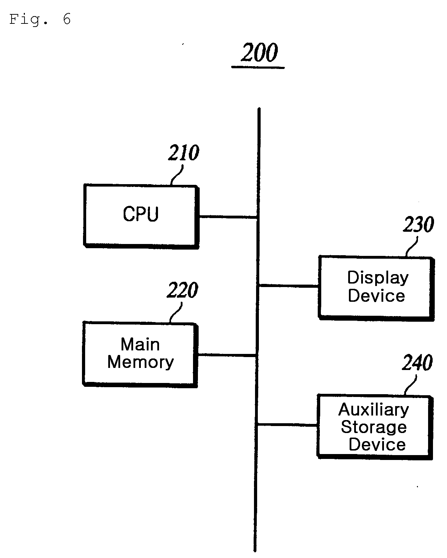

FIGURE 6 is a block diagram of a user terminal to execute a binary to which a security tag is applied according to the embodiment.

A binary to which a security tag is applied is stored in an auxiliary storage device 240 of a user terminal 200 through a distribution process. When the binary is executed in the user terminal 200, first, the binary is loaded into a main memory 220, and instructions of the binary are performed by CPU 210. The result is displayed on a display device 230.

The user terminal 200 according to an embodiment of the invention may be a personal computer (PC), a laptop computer, a tablet, a personal digital assistant (PDA), a game console, a portable multimedia player (PMP), a PlayStation Portable (PSP), a wireless communication terminal, a smart phone, TV, and a media player. The user terminal 200 according to an embodiment of the invention may be a server terminal such as an application server and a service server. The user terminal according to an embodiment of the invention may refer to various devices including (i) a communication device such as a communication modem for performing communication with various devices or a wired/wireless communication network, (ii) a memory for storing various programs and data for inter or intra prediction to execute a verification method of dynamic code using hash, (iii) a microprocessor for executing the program to perform computation and control, and the like. In accordance with at least one embodiment, the memory may be a computer-readable recording/storage medium such as a Random Access Memory(RAM), a Read Only Memory(ROM), a flash memory, an optical disk, a magnetic disk, a solid state disk (SSD). In accordance with at least one embodiment, the microprocessor may be programmed to perform optionally at least one of the operations and functions described herein. In accordance with at least one embodiment, the microprocessor may be implemented on the whole or on the part thereof as a hardware such as an application specific integrated circuit (ASIC) of a particular configuration.

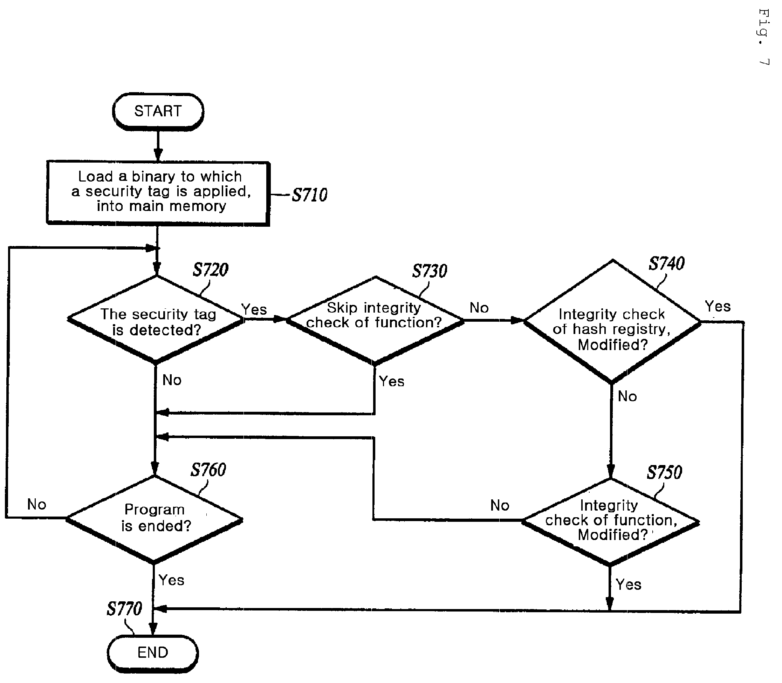

FIGURE 7 is a flow diagram of a process of performing the integrity verification of a function unit for a binary to which a security tag is applied according to the embodiment.

In order to execute a binary to which a security tag is applied, the binary is loaded into a main memory (200) (S710). When the binary is executed, if the function to which a security tag is applied is called and the security tag is then detected (S720), the integrity of the function is verified.

Hereinafter, the process in which the security tag is detected and thus the integrity verification of the function unit is accomplished will be described. If the function to which security tag is applied is called and then the security tag is detected, it is determined whether the integrity verification for the function is performed (S730). The function to which a security tag is applied has the characteristics of not being called repeatedly since the security tag is applied to important functions which require security in account authentication, password entry, payment, security (hash checking, anti-debugging, etc.), encryption, decryption, validation of certificates, purchases and sales of goods, initialization, server communications, reading and writing of a configuration file (a SAFE file), arithmetic operation result determination and program execution, but in some cases there is a possibility that the integrity verification would be accomplished through repeated call of the function. In order to prepare for the above case, within the time interval after the integrity verification of the function it is necessary to avoid repeated re-verification of the integrity of the function. Thus, if the function is called again within a specific time interval after the integrity verification of the function, the integrity verification is skipped and the next step will be performed (S730).

In addition, there is a need to verify the integrity of a hash registry (S740). In order to verify the hash registry (S740), a table hash code for the hash code table including hash codes for at least one function unit stored in the hash registry is extracted (S364) in the same process as the process (S364) of extracting the table hash code for the hash code table in a hash registry generation process (S340). And it is determined whether both the extracted table hash code and the table hash code for the hash code table provided at the hash registry or a separate location are the same code (S740). In this case, the signature stored in the hash registry or a separate location can be provided after it is decrypted. If not matched, as the hash registry is modified, the program is transferred to the step of terminating the execution (S770).

The integrity check process of the function (S750) includes a hash code extraction step of extracting a hash code within a code block of the function using a hash function (MD5, SHA, Checksum, etc.) for the codes from the start tag indicating the start point of the integrity verification to the end tag indicating the end point thereof; confirming whether the hash code extracted in the hash code extraction step matches any one of the hash codes of the hash code table stored in the hash registry to determine whether the function is modified (S750); and shifting to the end step of the program if the function is modified (S770). If it is confirmed that the function is not modified in the integrity check process of the function (S750), the function is normally executed and these steps are repeated until the program ends (S760). In the end step of the program (S770), in case that the binary is modified, the return of the resources being used in the binary is performed and any one of a warning message indication, an execution stop and an execution ending can be performed.

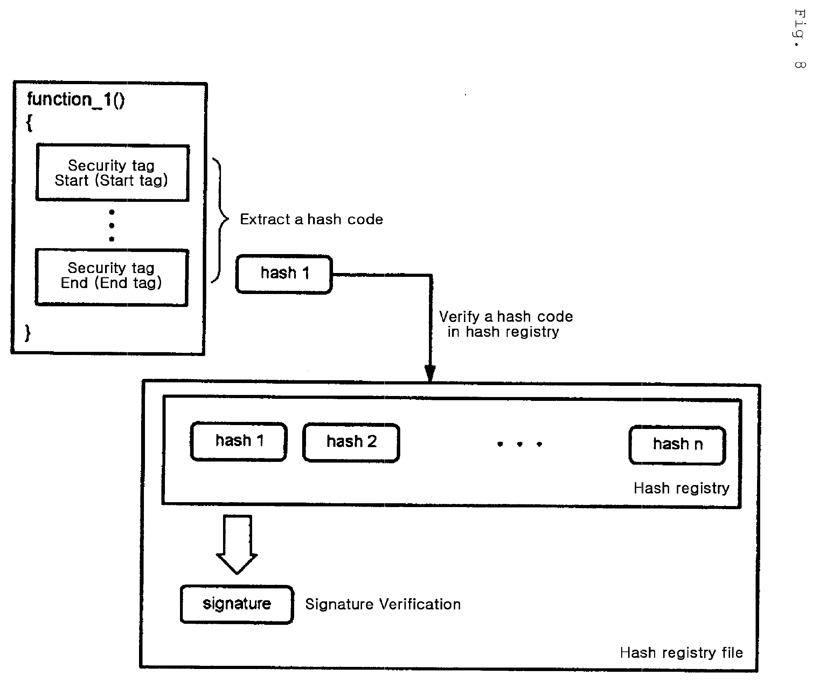

FIGURE 8 is a diagram illustrating a process of performing the integrity verification of the function unit according to the embodiment.

In the illustration of FIGURE 8, a binary to which the security tag of a function unit is applied is executed (S710); function_1 which is the function including a security tag is called; if the security tag is detected in function_1 (S720), a hash code of hash 1 is extracted from the codes from the start tag to the end tag using the hash function of MD5, SHA, Checksum, and the like; and it is confirmed whether hash 1 matches any one of the hash codes of the hash code table including hash 1, hash 2, ... , hash n stored in the hash registry to verify whether function_1 is modified (S750). At this time, in order to verify the hash registry, a table hash code for the hash code table including hash 1, hash 2, ... , hash n, is extracted; whether the extracted table hash code matches the table hash code decrypted from the signature is confirmed to verify whether the hash registry is modified (S740).

The above description is simply to describe the technical idea of the embodiments by way of examples. Those skilled in the art of the embodiments may make various modifications, additions and substitutions, without departing from principles of this disclosure. Accordingly, the embodiments are intended for illustrating rather than for limiting the technical scope of this embodiment. The scope of the technical concept of the embodiments is not limited by the embodiments. The scope of the embodiment is to be interpreted by the following claims. All such modifications and variations are to be construed as being included within the scope of this embodiment.

## Claims

1. A method for verifying the integrity of a dynamic code using a hash comprising:
a step for setting a security tag only for a specific function which is a part of program and requires security;
a binary generation step for generating a binary by compiling a source code including at least one function to which the security tag is applied;
a hash code extraction step for extracting a hash code for a code block of the specific function, if the binary is searched and the security tag is detected; and
a hash registry generation step for generating a hash registry including hash codes for at least one function generated in the hash code extraction step.

2. The method according to claim 1, wherein the security tag comprises a start tag indicating a starting point of a integrity check and an end tag indicating end point thereof within the code block of the specific function.

3. The method according to claim 2, wherein the hash code extraction step comprising extracting the hash code for codes from the start tag to the end tag within the code block of the specific function.

4. The method according to claim 1, wherein the hash registry generating step comprising:
storing a hash code table including the hash codes for the at least one function extracted in the hash code extracting step;
generating a signature by generating and encrypting a table hash code for the hash code table; and
storing the signature.

5. The method according to claim 1, wherein the specific function comprises at least one of password input, payment, account authentication, encryption, decryption, certificate verification, purchase and sale of goods, arithmetic operation result determination and initialization functions.

6. A method for verifying the integrity of a dynamic code using a hash comprising:
a step of loading into a main memory a binary including at least one function to which a security tag is applied;
a hash code extraction step for extracting a hash code for a code block of the function if a specific function including the security tag is called and the security tag is found during the execution of the binary in the main memory;
a function modification determination step for confirming whether the extracted hash code matches any one of the hash codes of a hash code table including the hash codes for at least one function stored in a hash registry to determine whether the specific function is modified; and
a step for stopping execution of the binary when the specific function is determined to be modified as the result of the function modification determination step.

7. The method according to claim 6, wherein the hash code extraction step comprising:
extracting the hash code for codes from the start tag indicating a start point of integrity check to the end tag indicating end point thereof within the code block of the specific function.

8. The method according to claim 6, wherein the hash code extraction step comprising:
skipping the integrity check for the specific function within a predetermined time period, if the specific function is again called after the integrity check for the specific function.

9. The method according to claim 6, wherein the hash code extraction step comprising:
extracting table hash code for the hash code table stored in the hash registry in order to verify whether the hash registry is modified; and
suspending the execution of the binary if the extracted table hash code does not match a table hash code decrypted from the signature stored in the hash registry or a separate location.
